# EUROPÄISCHE PATENTANMELDUNG

(11) **EP 4 066 626 A1**
(43) Veröffentlichungstag der Anmeldung: **05.10.2022**
(21) Anmeldenummer: 22160702.1
(22) Anmeldetag: 08.03.2022
(51) Int. Cl.: A01G 13/02

(54) **HAKEN ZUM HALTEN VON PFLANZENSCHUTZHÜLLEN**

(30) Priorität: 31.03.2021 AT 502302021
(71) Anmelder: WITASEK Pflanzenschutz GmbH, 9560 Feldkirchen (Ktn.) (AT)
(72) Erfinder: WITASEK, Peter, 9560 Feldkirchen (AT); GUGGEMOS, Josef, 86424 Dinkelscherben (DE)
(74) Vertreter: Beer & Partner Patentanwälte KG

(57) **Zusammenfassung**

Ein Haken (1) weist eine Hülse (2) auf, mit der der Haken (1) auf einen Stab (10) aufschiebbar ist. Von der Hülse (2) des Hakens (1) steht nach außen ein hakenförmiger Ansatz (4) ab. In Gebrauchslage greift der hakenförmige Ansatz (4) des auf einen Stab (10), der innerhalb einer Pflanzenschutzhülle (15) oder eines Baumschutznetzes angeordnet und im Erdreich verankert ist, aufgeschobenen Haken (1) über den oberen Rand der Pflanzenschutzhülle (15) oder des Baumschutznetzes und sichert diese gegen Ausheben.

## Beschreibung

Die Erfindung betrifft einen Haken mit den Merkmalen des einleitenden Teils von Anspruch 1, der zum Halten von Pflanzenschutzhüllen und Baumschutznetzen bestimmt ist. Weiters betrifft die Erfindung eine Kombination aus Stab und Haken sowie ein Werkzeug.

Pflanzenschutzhüllen sind in verschiedenen Ausführungsformen bekannt. Sie dienen dazu, Pflanzen, wie Weinstöcke, Bäume und Ähnliches zu schützen.

Immer wieder kommt es vor, dass Pflanzenschutzhüllen und Baumschutznetze von Tieren, wie fegenden Rehböcken, oder durch Wind (Sturm) hochgehoben werden.

In FR 2 824 995 A1 ist eine Pflanzenschutzhülle gezeigt und beschrieben. Die Pflanzenschutzhülle besteht aus Platten, die mit in den Boden gesteckten Stäben zusammengehalten werden. Über die Stäbe sind oberhalb der eigentlichen Pflanzenschutzhülle Drähte vorgesehen. Auf die Stäbe sind Verbinder gesteckt, wozu die Verbinder ein Durchgangsloch aufweisen. Zusätzlich weisen die Verbinder Querlöcher auf, durch die Versteifungsstäbe gesteckt sind. Die Haken der Verbinder sind über die Drähte gehängt. Die Verbinder von FR 2 824 995 A sind nicht zum Sichern einer Pflanzenschutzhülle gedacht.

Geoffenbart ist in CN 205284435 U ein rohrförmiger Stützstab, auf dessen oberes Ende eine Kappe geschraubt ist. Die Kappe sichert eine über den Stützstab gesteckte Hülse, von der zwei nach oben weisende Haken abstehen. Über die Haken können Netze gehängt werden. Die mit Haken ausgestattete Hülse von CN 205284435 U dient nicht dazu, eine Pflanzenschutzhülle zu sichern.

GB 2 388 156 A lehrt einen Haken, bestehend aus einem Arm und einem nach unten weisenden Teil, der von einem geschlitzten zylindrischen Körper absteht. Der Haken soll mit Hilfe des zylindrischen Körpers an dem Stiel eines Reinigungsgerätes (Mop) festgelegt werden, damit das Reinigungsgerät an einem Wagen für Reinigungskräfte angehängt werden kann.

Aus CH 276800 A ist eine Zange bekannt, die zwei Zangenschenkel mit je einem Haken aufweist.

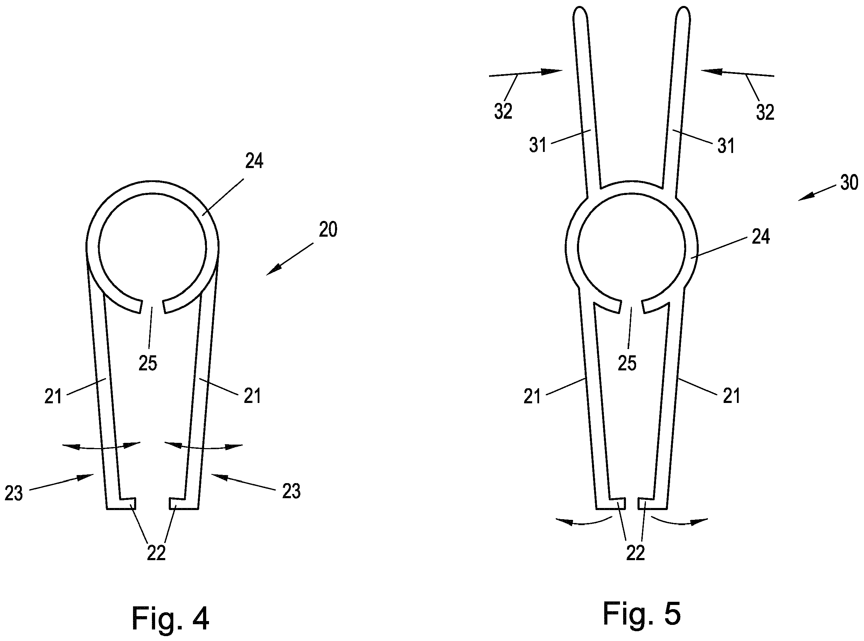

Gezeigt und beschrieben ist in CA 2,127,481 A1 ein Gerät zum Entfernen von Zecken. Das Gerät weist in der Ausführungsform von Fig. 4 und 5 zwei Blattfedern auf, über die eine Hülse gesteckt ist. Die Blattfedern sind miteinander über einen Ring verbunden. Die vorderen Enden sind so ausgerichtet, dass ihre freien Enden bei vorgeschobener Hülse aneinander anliegen.

CH 346330 A zeigt eine Zange nach Art einer Pinzette mit einem teilringartigen Handgriff und zwei Stäben, deren freie Enden abgebogen sind.

WO 2017/122191 A1 betrifft eine Klemme (Klipp) zum Befestigen einer Pflanze an einem Pflanzstab und kein Werkzeug nach Art einer Zange. Die Hebel an dem Ring dienen dazu, den Ring aufzuweiten, damit er über den Pflanzstab gesteckt werden kann. Die Arme mit nach außen weisend umgebogenen Enden dienen dazu, einen Draht aufzunehmen.

Der Erfindung liegt die Aufgabe zu Grunde, den Haken, die Kombination und das Werkzeug der der eingangs genannten Gattungen zur Verfügung zu stellen, wobei der Haken auf einfache Weise das Ausheben bzw. Hochheben von Pflanzenschutzhüllen und Baumschutznetzen verhindert.

Gelöst wird diese Aufgabe erfindungsgemäß mit einem Haken, der die Merkmale von Anspruch 1 aufweist.

Bevorzugte und vorteilhafte Ausgestaltungen des erfindungsgemäßen Hakens sind Gegenstand der Unteransprüche.

Da der erfindungsgemäße Haken einen hülsenartigen Teil aufweist, kann er über einen im Boden verankerten (in den Boden hineingesteckten) Stab, z.B. einen Pflanzstab, aufgeschoben werden, sodass sich der Haken in der richtigen Höhe befindet, um den oberen Rand der Pflanzenschutzhülle oder des Baumschutznetzes zu übergreifen und die Pflanzenschutzhülle und das Baumschutznetz niederzuhalten.

Bei der Kombination aus einem erfindungsgemäßen Haken und einem Stab gemäß der Erfindung ist vorgesehen, dass die Innenseite der Hülse, welche den hakenförmigen Ansatz trägt, wenigstens bereichsweise an die Kontur des Pflanzstabes angepasst ist. Dies ist insbesondere vorteilhaft, wenn der Pflanzstab einen vom runden Querschnitt abweichenden Querschnitt, z.B. den Querschnitt in Form eines dreistrahligen Sterns (vgl. AT 16 376 U2), aufweist. Dabei ist erfindungsgemäß vorgesehen, dass die Hülse einen nach innen weisenden Vorsprung in Form einer flach konvex gekrümmten Rippe aufweist, so dass die Innenfläche der Rippe eine Form hat, die der Form einer Nut eines Stabes mit der Querschnittsform eines dreistrahligen Sterns entspricht.

In diesem Fall kann vorgesehen sein, dass in das Innere der Hülse eine Rippe ragt, die durch wenigstens einen verdickten Bereich der Wand der Hülse gebildet ist.

Das erfindungsgemäße Werkzeug zeichnet sich durch die in Anspruch 8 genannten Merkmale aus.

Weitere Einzelheiten oder Merkmale der Erfindung ergeben sich aus der nachstehenden Beschreibung eines bevorzugten Ausführungsbeispiels anhand der Zeichnungen. Es zeigt:
- Fig. 1: in Schrägansicht einen auf einem Pflanzstab aufgesteckten Haken,
- Fig. 2: den auf dem Pflanzstab aufgesetzten Haken von schräg oben gesehen,
- Fig. 3: den erfindungsgemäßen Haken aus Fig. 1 und Fig. 2 in Gebrauchslage im Inneren einer Pflanzenschutzhülle,
- Fig. 4: ein Abziehwerkzeug und
- Fig. 5: ein weiteres Abziehwerkzeug,
- Fig. 6: in Draufsicht eine abgeänderte Ausführungsform des Hakens und
- Fig. 7: im Schnitt die Ausführungsform des Hakens von Fig. 6.

Ein erfindungsgemäßer Haken 1 besitzt einen als beispielsweise ringförmige Hülse 2 ausgebildeten Grundkörper 3. Die Außenfläche des Grundkörpers 3 ist im Wesentlichen zylindermantelförmig.

Von der Hülse 2 steht seitlich (radial) ein hakenförmiger Ansatz 4 ab, der zusammen mit der Hülse 2 den erfindungsgemäßen Haken 1 bildet. Der Ansatz 4 umfasst einen Steg 5, der beispielsweise gleich hoch ist wie die Hülse 2, und einen etwa zylinderförmigen Körper 6. Ein Ende 7 - in Gebrauchslage des Hakens 1 das untere Ende 7 - des zylinderförmigen Körpers 6 des hakenförmigen Ansatzes 4 steht auf einer Seite über den Steg 5 und auch über die Hülse 2 über. So bildet der zylinderförmige Körper 6, der in Gebrauchslage über den Steg 5 und vorzugsweise auch über die Hülse 2 nach unten übersteht, zusammen mit dem Steg 5 den hakenförmigen Ansatz 4.

In dem gezeigten Ausführungsbeispiel ist der zylinderförmige Körper 6 an dem Steg 5, der ihn mit der Hülse 2 verbindet, asymmetrisch angeordnet, sodass er von dem Steg 5 nach einer Seite übersteht. Auch eine bezüglich des Steges 5 symmetrische Anordnung des Körpers 6 ist in Betracht gezogen. Der Durchmesser des zylinderförmigen Körpers 6 ist bei der erfindungsgemäßen Ausführungsform des Hakens 1 im Wesentlichen gleich groß wie die Dicke (Stärke) des Steges 5.

In dem Steg 5 des erfindungsgemäßen Hakens 1 kann ein Loch 8 vorgesehen sein.

Wenigstens ein weiteres Loch 9 ist in der Wand 13 der Hülse 2 vorgesehen. In die Löcher 8 und 9 kann ein Werkzeug, z.B. ein gabelförmiges Werkzeug 20 ("Abziehwerkzeug") mit zwei Zinken 21 (vgl. Fig.4), die umgebogene freie Enden 22 haben, eingesetzt werden. Wenn in der Wand 13 der Hülse 2 zwei einander bezüglich der Achse der Hülse 2 diametral gegenüberliegende Löcher 9 vorgesehen sind, können die abgebogenen Enden 22 des Abziehwerkzeuges 20 in die einander gegenüberliegenden Löcher 9 der Hülse 2 eingesetzt werden, um den Haken 1 von einem Stab abziehen zu können, ohne dass die Gefahr besteht, dass sich die Hülse 2 des Hakens 1 verkantet und das Abziehen des Hakens 1 behindert.

In Betracht gezogen ist auch eine Ausführungsform des Abziehwerkzeuges 20 mit vier Zinken 21, wobei die umgebogenen freien Enden 22 der Zinken von einander gegenüberliegenden Seiten her in die Löcher 8 und 9 eingesetzt werden können. Mit diesem Werkzeug 20 kann der erfindungsgemäße Haken 1 von einem Stab 10, z.B. einem Pflanzstab, ohne das Abziehen behinderndes Schrägstellen, abgezogen werden. Alternativ kann ein Werkzeug 30 nach Art einer Zange, deren als Backen dienende Zinken 21 hakenartige Enden 22 aufweisen, ausgebildet sein. Bevorzugt sind an dem Werkzeug 20 oder 30 so viele hakenartige Enden 22 vorgesehen, wie in dem Haken 1 Löcher 8 und 9 vorgesehen sind.

Beim Benutzen des Werkzeuges 20 werden die Zinken 21 - wie in Fig. 4 durch Pfeile 23 angedeutet - unter elastischem Verformen der Zinken 21 und/oder des die Zinken 21 tragenden Ringes 24, der beispielsweise eine Unterbrechung 25 aufweist, einander angenähert, um die Enden 22 in die Löcher 9 oder 8 einzuführen. Dann kann der Haken 1 unter weiterem Belasten der Zinken 21 durch Angriff an dem Ring 24, beispielsweise mit einem Finger, von einem Stab abgezogen werden. Wenn das Werkzeug 20 losgelassen wird, federn die Zinken 21 wieder auseinander, so dass der Haken 1 von dem Werkzeug 20 freikommt. Bei dem in Fig. 5 gezeigten, zangenartigen Werkzeug 30 sind die Zinken 21 so angeordnet, dass ihre Enden 22 im entspannten Zustand (Fig. 5) einander angenähert sind. Erst wenn die Hebel 31 - wie durch Pfeile 32 angedeutet - aufeinander zu gedrückt werden, bewegen sich die Enden 22 der Zinken 21 unter elastischem Verformen des eine Unterbrechung 25 aufweisenden Ringes 24 auseinander, so dass die Enden 22 in die Löcher 9 der Hülse 2 eingeführt werden können. Nun werden die Hebel 31 nicht mehr belastet und die Hülse 2 kann durch Angriff an dem Ring 24, beispielsweise mit einem Finger, von einem Stab abgezogen werden. Zum Freigeben des Hakens 1 werden die Zinken 21 durch Angriff an den Hebeln 31 so geschwenkt, dass die Enden 22 aus den Löchern 9 freikommen.

Sowohl das Werkzeug 20 der Fig. 4 als auch das Werkzeug 30 der Fig. 5 kann einteilig aus elastischem Werkstoff, beispielsweise Kunststoff, ausgebildet sein.

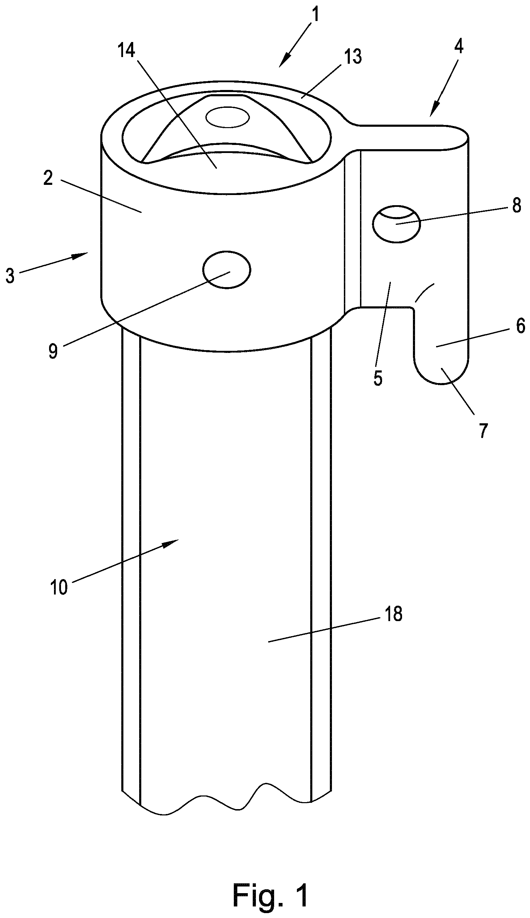

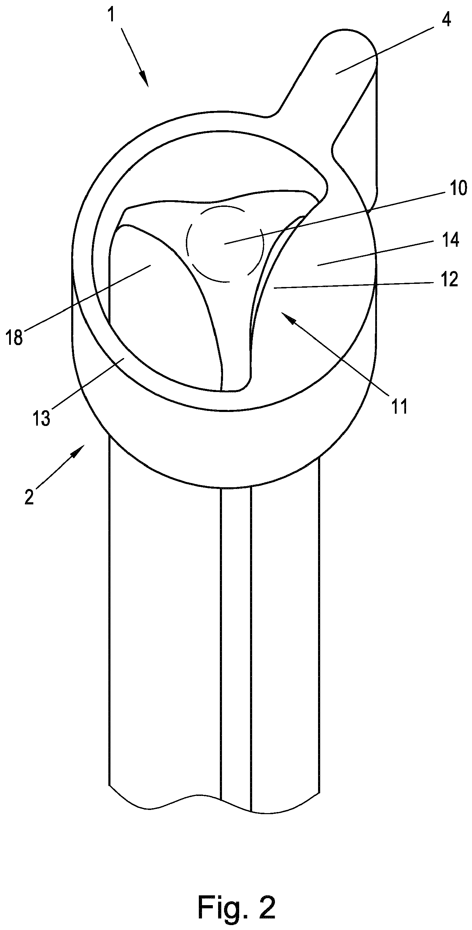

Insbesondere Fig. 2 zeigt, dass die Innenseite der den Grundkörper 3 des Hakens 1 bildenden Hülse 2 der Außenform des Stabes 10, an dem der erfindungsgemäße Haken 1 aufzusetzen ist, angepasst sein kann. Im gezeigten Ausführungsbeispiel ist (vgl. Fig. 1 und Fig. 2) der Stab ein Stab 10 mit der Querschnittsform nach Art eines dreistrahligen Sterns, der aus der AT 16 376 U2 bekannt ist. Um die Innenform der Hülse 2 an diesen Stab 10 anzupassen, weist sie einen nach innen weisenden Vorsprung in Form einer flach konvex gekrümmten Rippe 12 auf. Mit anderen Worten ist die Wand 13 der Hülse 2 im Bereich 14 verdickt ausgebildet und besitzt im verdickten Bereich 14 eine in Draufsicht im Wesentlichen linsenförmige Querschnittsform. So ist die Innenform der Hülse 2 an die Außenform des Stabes 10 bereichsweise angepasst. Wie insbesondere Fig. 2 zeigt, greift die durch den verdickten Bereich 14 der Wand 13 der Hülse 2 gebildete Rippe 12 in eine der längslaufenden Nuten 18 des Stabes 10 ein. So ist der Sitz des Hakens 1 auf dem Stab 10 verbessert.

Bevorzugt ist das Loch 9 oder eines der Löcher 9 im verdickten Bereich 14 der Wand 13 der Hülse 2 vorgesehen.

Die Innenabmessungen der Hülse 2 sind - bezogen auf den Stab 10, auf den der Haken 1 aufzusetzen ist - so gewählt, dass der Haken 1 auf dem Stab 10 reibschlüssig sitzt, sodass er in beliebiger Höhe ausgerichtet werden kann, indem er einfach so weit wie erforderlich auf den Stab 10 aufgeschoben wird.

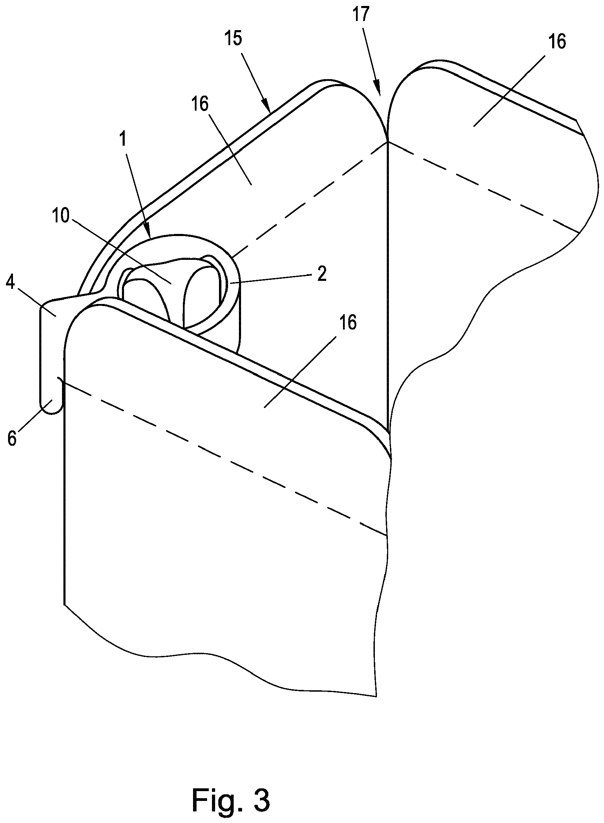

In Fig. 3 ist gezeigt, wie der erfindungsgemäße Haken 1 bei einer Pflanzenschutzhülle 15, die im gezeigten Beispiel die Form des Mantels eines vierseitigen Prismas hat, verwendet werden kann. Dabei ist der Stab 10, z.B. ein Pflanzstab, im Inneren der Pflanzenschutzhülle 15 angeordnet. Die Hülse 2 des Hakens 1 liegt bevorzugt im Winkel zwischen zwei aneinandergrenzenden Wänden 16 der Pflanzenschutzhülle 15 an der Pflanzenschutzhülle 15 an. Der hakenförmige Ansatz 4 übergreift den oberen Rand der Pflanzenschutzhülle 15. In dem in Fig. 3 gezeigten Anwendungsbeispiel greift der hakenförmige Ansatz 4 über einen Einschnitt 17 im oberen Randbereich der Pflanzenschutzhülle 15, sodass der zylinderförmige Körper 6 außerhalb der Pflanzenschutzhülle 15 angeordnet ist.

Der in Gebrauchslage untere Rand des Steges 5 des Ansatzes 4 liegt an dem oberen Rand der Pflanzenschutzhülle 15, beispielsweise an dem unteren Ende (= Grund) des Einschnittes 17, durch den der Steg 5 nach außen ragt, an. So ist gewährleistet, dass die Pflanzenschutzhülle 15 nicht ohne Weiteres ausgehoben bzw. hochgehoben werden kann, insbesondere nicht hochgehoben werden und vom Stab 10 freikommen kann, was durch Wind oder oft durch Fegen von Rehböcken vorkommen kann, wenn die Pflanzenschutzhülle 15 nicht gegen Ausheben oder Hochheben gesichert ist.

Wenn der erfindungsgemäße Haken 1 zum Niederhalten eines Baumschutznetzes verwendet wird, greift der hakenförmige Ansatz 4 des Hakens 1 über den oberen Rand des Baumschutznetzes, wobei der untere Rand des Steges 5 auf dem oberen Rand des Baumschutznetzes anliegt.

Grundsätzlich ist der erfindungsgemäße Haken 1 für alle Arten und Ausführungsformen von rohrartigen Pflanzenschutzhüllen geeignet.

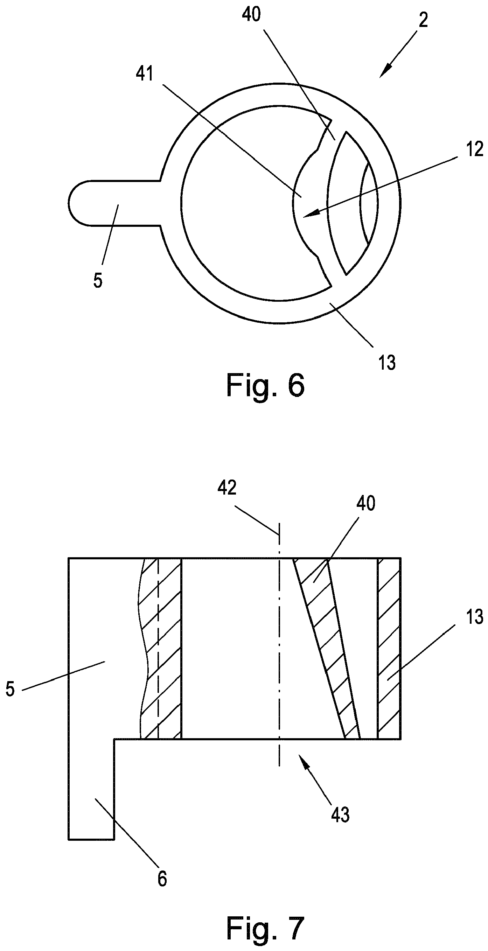

Bei der in den Fig. 6 und 7 gezeigten Ausführungsform ist die im Inneren der Hülse 2 vorgesehene Rippe 12 durch einen konvex gekrümmten Bogen 40 gebildet. Aus der Schnittdarstellung von Fig. 7 ist zu erkennen, dass der Scheitel 41 des Bogens 40 mit der Achse 42 der Hülse 2 einen spitzen Winkel einschließt. Dabei ist vorgesehen, dass die Wandstärke des Bogens 40 von der Seite der Hülse 2, auf welcher der zylinderförmige Körper 6 über den Steg 5 übersteht - das ist in der üblichen Gebrauchslage des Hakens 1 das unten liegende Ende der Hülse 2 - weg zunimmt. Die Zunahme der Wandstärke des Bogens 40 kann auf den mittleren Bereich des Bogens 40, also im Wesentlichen auf den Bereich des Scheitels 41 beschränkt sein.

Die in den Fig. 6 und 7 gezeigte Ausführungsform des erfindungsgemäßen Hakens 1 hat den Vorteil, dass die Rippe 12 besser elastisch verformbar ist, was einen guten Halt auf einem Stab ergibt.

Von Vorteil ist auch die schräge Ausrichtung des Scheitels 41 des Bogens 40, weil dies das Aufsetzen des erfindungsgemäßen Hakens 1 auf einen Stab erleichtert, weil in der Hülse 2 unten eine größere Öffnung 43 liegt.

Zusammenfassend kann ein Ausführungsbeispiel der Erfindung wie folgt beschrieben werden:
Ein Haken 1 weist eine Hülse 2 auf, mit der der Haken 1 auf einen Stab 10 aufschiebbar ist. Von der Hülse 2 des Hakens 1 steht nach außen ein hakenförmiger Ansatz 4 ab. In Gebrauchslage greift der hakenförmige Ansatz 4 des auf einen Stab 10, der innerhalb einer Pflanzenschutzhülle 15 oder eines Baumschutznetzes angeordnet und im Erdreich verankert ist, aufgeschobenen Haken 1 über den oberen Rand der Pflanzenschutzhülle 15 oder des Baumschutznetzes und sichert diese gegen Ausheben.

## Patentansprüche

1. Haken (1) zum Sichern einer Pflanzenschutzhülle (15), wobei der Haken (1) einen nach Art einer Hülse (2) ausgebildeten Grundkörper (3) und einen von dem Grundkörper (3) abstehenden hakenförmigen Ansatz (4) aufweist, **dadurch gekennzeichnet, dass** der hakenförmige Ansatz (4) einen von der Hülse (2) nach außen abstehenden Steg (5) und einen an dem freien Ende des Steges (5) angeordneten, zylinderförmigen Körper (6) aufweist, dass der zylinderförmige Körper (6) im Wesentlichen so dick ausgebildet ist wie der Steg (5), und dass das freie Ende des zylinderförmigen Körpers (6) über die Hülse (2) einseitig übersteht.

2. Haken nach Anspruch 1, **dadurch gekennzeichnet, dass** die Hülse (2) im Wesentlichen die Form eines zylindermantelförmigen Ringes aufweist.

3. Haken nach Anspruch 1 oder 2, **dadurch gekennzeichnet, dass** in dem Steg (5) ein Loch (8) vorgesehen ist.

4. Haken nach einem der Ansprüche 1 bis 3, **dadurch gekennzeichnet, dass** in der Wand (13) der Hülse (2) wenigstens ein Loch (9), vorzugsweise zwei einander diametral gegenüberliegende Löcher (9), vorgesehen ist/sind.

5. Haken nach Anspruch 4, **dadurch gekennzeichnet, dass** das Loch (9) in einem verdickten Bereich (14) der Wand (13) der Hülse (2) vorgesehen ist.

6. Haken nach einem der Ansprüche 1 bis 5, **dadurch gekennzeichnet, dass** im Inneren der Hülse (2) eine von einem konvex gekrümmten Bogen (40) gebildete Rippe (12) vorgesehen ist.

7. Haken nach Anspruch 6, **dadurch gekennzeichnet, dass** der Scheitel (41) des Bogens (40) mit der Achse (42) der Hülse (2) einen spitzen Winkel einschließt.

8. Haken nach Anspruch 7, **dadurch gekennzeichnet, dass** die Öffnung (43) an der Seite der Hülse (2), auf welcher der Körper (6) über den Steg (5) übersteht, größer ist als auf der gegenüberliegenden Seite.

9. Haken nach einem der Ansprüche 6 bis 8, **dadurch gekennzeichnet, dass** die Wandstärke des Bogens (40) von der Seite der Hülse (2), auf welcher der Körper (6) über den Steg (5) übersteht, weg zunimmt.

10. Kombination aus einem Stab (10), insbesondere einem Pflanzstab, mit einem Haken (1) nach einem der Ansprüche 1 bis 9, wobei die Hülse (2) des Hakens (1) auf dem Stab (10) mit Reibschluss sitzt, und wobei die Innenseite der Hülse (2) dem Außenquerschnitt eines Stabes (10), auf den der Haken (1) aufzusetzen ist, angepasst ist, **dadurch gekennzeichnet, dass** die Hülse (2) einen nach innen weisenden Vorsprung in Form einer flach konvex gekrümmten Rippe (12) aufweist, so dass die Innenfläche der Rippe (12) eine Form hat, die der Form einer Nut (18) eines Stabes (10) mit der Querschnittsform eines dreistrahligen Sterns entspricht.

11. Kombination nach Anspruch 6, **dadurch gekennzeichnet, dass** in das Innere der Hülse (2) eine Rippe (12) ragt, die durch wenigstens einen verdickten Bereich (14) der Wand (13) der Hülse (2) gebildet ist.

12. Werkzeug zum Abziehen des Hakens (1) nach einem der Ansprüche 3 bis 9 von einem Stab (10), wobei das Werkzeug wenigstens zwei Zinken (21), deren freie Enden (22) hakenartig ausgebildet sind und die in Löcher (8 und 9) des Hakens (1) einführbar sind, aufweist, **dadurch gekennzeichnet, dass** die Zinken (21) an einem elastisch verformbaren Ring (24) angeordnet sind, dass der Ring (24) eine Unterbrechung (25) aufweist, und dass an dem Ring (24) den Zinken (21) gegenüberliegend zwei Hebel (31) angeordnet sind.
